# EUROPÄISCHE PATENTANMELDUNG

(11) **EP 3 124 928 A2**
(43) Veröffentlichungstag der Anmeldung: **01.02.2017**
(21) Anmeldenummer: 16001677.0
(22) Anmeldetag: 29.07.2016
(51) Int. Cl.: G01K 1/14

(54) **HALTEVORRICHTUNG UND VERWENDUNG EINES KODIERELEMENTS**

(30) Priorität: 29.07.2015 DE 102015009618
(71) Anmelder: Testo Sensor GmbH, 79853 Lenzkirch (DE)
(72) Erfinder: Binder, Jörg, 79877 Fiedenweiler (DE); Bailer, Mathais, 79256 Buchenbach (DE)
(74) Vertreter: Börjes-Pestalozza, Henrich

(57) **Zusammenfassung**

Dementsprechend betrifft die vorstehend beschriebene Erfindung eine Haltevorrichtung (1) zur ortsfesten Anordnung von wenigstens einem Messfühler (21) an einem von einem Medium durchströmten Messrohr (20), wobei die Haltevorrichtung (1) ein Halteelement (5) aufweist, welches in Gebrauchsstellung das Messrohr (20) umgreift. Dabei ist das Halteelement (5) mittels zumindest einer Rastverbindung (10, 10') zur ortsfesten Anordnung schließbar und das Halteelement (5) trägt wenigstens eine Messfühler-Aufnahme (25) für den zumindest einen Messfühler (21). Dabei weist das Halteelement (5) wenigstens einen die Rastverbindung herstellenden Rastkopf auf, der mit einer Abdeckung (12, 12') versehen ist, die ein Lösen der Rastverbindung (10, 10`) verhindert, und in Gebrauchsstellung ist zwischen dem umgriffenen Messrohr 20 und dem Halteelement (5) wenigstens ein nachgiebiges Belagteil (15) angeordnet. Außerdem kann bei einem weiteren Aspekt der Erfindung die Haltevorrichtung (1) mit einer Verbindungsmittel-Aufnahme (22) für ein elektrische Verbindungsmittel (19) zur Verbindung mit dem Messfühler (21) aufweisen, wobei der Messfühler (21) aus der Messfühler-Aufnahme (25) entfernbar ist, ohne dass das Verbindungsmittel (19) aus der Verbindungsmittel-Aufnahme (22) entfernt sein muss. Dabei kann schließlich ein Kodierelements (6) zur Kodierung einer Steckverbindung zwischen einem Verbindungsmittel (19) und einer Verbindungsmittel-Aufnahme (22) einer Haltevorrichtung (1) Verwendung finden.

## Beschreibung

Die Erfindung betrifft eine Haltevorrichtung zur ortsfesten Anordnung von wenigstens einem Messfühler an einem von einem Medium durchströmten Messrohr, wobei die Haltevorrichtung ein Halteelement aufweist, welches in Gebrauchsstellung das Messrohr umgreift. Außerdem betrifft die Erfindung auch die Verwendung eines Kodierelements, welches an einem Verbindungsmittel oder einer Verbindungsmittel-Aufnahme angeordnet wird, um das Verbindungsmittels auf die Verbindungsmittel-Aufnahme zu kodieren.

Derartige Haltevorrichtungen sind im Prinzip bekannt und werden beispielsweise bei Systemen eingesetzt, mittels derer an Heizungsanlagen Temperaturmessungen insbesondere an definierten Punkten des jeweiligen Rohrsystems vorgenommen werden.

Beispielsweise bietet die Firma Tasseron mit der TSC-Serie Temperaturfühler an, die ein Fühlergehäuse aufweisen, an dem eine entsprechend dem Rohrdurchmesser gebogene, das Rohr teilweise umgreifende Metallfeder angeordnet ist. Die Metallfeder ist auf das Rohr aufsteckbar und hält die Messvorrichtung an der Messstelle.

Bei derartigen Systemen besteht jedoch nicht selten das Problem, dass deren Halterung unbeabsichtigt an dem Rohr, an welchem Sie befestigt ist, verschoben oder verdreht werden kann.

Da hierdurch der Messpunkt verändert wird, können sich Probleme aus dem Umstand ergeben, dass aus dem Messsignal des Messfühlers gegebenenfalls ein Regelungsverfahren gespeist wird. Die Erfindung beschäftigt sich also unter anderem mit einer unveränderlich ortsfesten Anordnung einer Haltevorrichtung an einem Messrohr.

Überdies erlauben es die bekannten Systeme hierbei auch, einen Messfühler mit einem zugehörigen Verbindungsmittel in Form eines elektrischen Verbindungskabels an einem Rohr zu befestigen. Hier besteht das Problem, dass bei einer Wartung oder bei sonstigen Arbeitsvorgängen die Verbindung zwischen dem Messkabel und dem Messfühler gelöst wird, und dass anschließend - insbesondere bei der Verwendung von mehreren Messfühlern - die elektrischen Kontaktierungen vertauscht werden. In diesem Zusammenhang ist also eine eindeutige, nicht verwechselbare Zuordnung wünschenswert. Die Erfindung beschäftigt sich auch damit, ein dahingehend verbessertes System bereitzustellten.

Zur Lösung dieser Aufgabe werden erfindungsgemäß die Merkmale des Anspruchs 1 vorgeschlagen. Insbesondere ist somit erfindungsgemäß das Halteelement mittels zumindest einer Rastverbindung zur ortsfesten Anordnung schließbar und das Halteelement trägt wenigstens eine Messfühler-Aufnahme für den zumindest einen Messfühler. Zudem weist erfindungsgemäß bei einer Haltevorrichtung der eingangs genannten Art das Halteelement wenigstens einen die Rastverbindung herstellenden Rastkopf auf, der mit einer Abdeckung versehen ist, die ein Lösen der Rastverbindung verhindert, und an dem Halteelement ist wenigstens ein nachgiebiges Belagteil ausgebildet, welches in Gebrauchsstellung zwischen dem umgriffenen Messrohr und dem Halteelement wenigstens ein nachgiebiges Belagteil angeordnet ist.

Die gewünschte ortsfeste Anordnung des Messsystems erreicht die Erfindung also mittels einer Haltevorrichtung, die zum einen das Halteelement mittels einer solchen Rastverbindung hält, die einem Lösen dieser Verbindung durch einen Schutz entgegenwirkt und bei der zum anderen die Rastverbindung selbst überhaupt erst dadurch hergestellt werden kann, dass an dem Messrohrs durch Vorsehen des nachgiebigen Belagteils eine Möglichkeit geschaffen wird, den durch das Halteelement umgriffenen Querschnitt bereits beim Schließen der Rastverbindung zu verkleinern. Dabei wird das Halteelement in Gebrauchsstellung an dem Messrohr gespannt, wobei der umgriffene Messrohrkörper der Querschnittsverkleinerung des Halteelements entgegenzuwirken versucht, was in einer Kraft resultiert, die auf den Rastkopf und entlang des Halteelements entgegen der Einsteck- bzw. Verrastungsrichtung wirkt. Die Abdeckung des Rastkopf hilft dabei, dass der Rastkopf dieser Kraft nicht nachgibt und die Rastverbindung auch nicht unerwünscht oder unbefugt gelöst wird, so dass die Haltevorrichtung fest und unveränderlich an dem Rohr befestigbar ist. Das Belagteil kann beispielsweise aus einem elastischen Material gefertigt sein. Außerdem betrifft die Erfindung auch die Verwendung eines Kodierelement, welches an einem Verbindungsmittel oder einer Verbindungsmittel-Aufnahme angeordnet wird, um das Verbindungsmittels auf die verbindungsmittel-Aufnahme zu kodieren.

Für die beim Herstellen der Rastverbindung erwünschte Verkleinerung des umgriffenen Querschnitts kann es bei einer vorteilhaften Ausführung der Haltevorrichtung vorgesehen sein, das wenigstens eine Belagteil insbesondere in Verbindungsrichtung zwischen Messrohr und Halteelement und/oder zumindest in einer von dem Halteelement abragenden Dimension nachgiebig auszubilden. Dabei sind etwa auch Ausführungen mit einer elastischen Komponente, die eine Kraft mit vorzugsweise in etwa radial von dem Messrohr weg weisender Kraft ausübt, denkbar.

Bei einer bevorzugten Weiterbildung, die eine vorteilhafte, über den Umfang des Messrohrs und damit auch entlang des Haltelements gleichmäßige Kraftverteilung bei Etablierung der Rastverbindung ermöglicht, ist eine Mehrzahl insbesondere über den Umfang des Messrohrs gleichmäßig beabstandeter Belagteile vorgesehen. Es kann sich aber beispielsweise das eine Belagteil auch über den gesamten Umfang des Messrohres zwischen diesem und dem Halteelement erstrecken.

Die zur zweckmäßigen Festlegung des Halteelements an dem Messrohr eingesetzte Rastverbindung, die dazu führt, dass die Haltevorrichtung in einfacher Weise, nämlich beispielsweise einhändig mit dem Messrohr verbindbar ist, wird demnach hergestellt, indem das Halteelement um das Rohr derart gespannt wird, dass der weiche Belag zusammengepresst wird.

Dies erlaubt die für die Herstellung einer Rastverbindung nötige Überstreckung und ermöglicht, nach Einrasten der Rastverbindung die Haltevorrichtung kraftschlüssig unverrückbar an dem Rohr zu befestigen. Hierfür kann bei einer Ausführung der Haltevorrichtung vorteilhaft die nachgiebige Ausgestaltung des Belagteils so dimensioniert sein, dass ein Einrasten der Rastverbindung und ein kraftschlüssiges umgreifen des Messrohrs ermöglicht ist. Überdies kann bei einer weiteren Ausbildung das Halteelement aus wenigstens einem Metallband gebildet sein, mit welchem das wenigstens eine Belagteil verbunden, insbesondere durch Anspritzen verbunden, ist. Zum einen lässt sich an dieses Metallband das wenigstens eine Belagteil in einfacher Weise durch einen Spritzvorgang anbringen zum anderen weist das Metallband selbst eine genügend hohe Flexibilität auf, um einerseits das Messrohr eng zu umfangen und den umgriffenen Querschnitt zu verändern, und andererseits die für die Herstellung der Rastverbindung geforderte Überstreckung zur Verfügung zu stellen.

In ähnlicher weise wie das Belagteil können bei anderen Ausführungen sowohl der Rastkopf der Rastverbindung ebenso wie die Abdeckung mit dem Halteelement mittels Anspritzen dauerhaft verbunden sein. Dabei können das wenigstens eine Belagteil und die Abdeckung jeweils aus einem Kunststoff gebildet sein, der bei der Abdeckung eine höhere Materialhärte als bei dem Belagteil aufweist, da bei ersterem eine mechanische Schutzfunktion und nicht etwa seine mechanische Nachgiebigkeit im Vordergrund steht.

In einfacher Weise, nämlich im Wesentlichen durch Ausübung eines Drucks auf den Rastkopf in Richtung des Messrohres, sind Enden des Halteelements einer Ausführung der Haltevorrichtung zu verbinden, bei der die Rastverbindung durch zwei freie Enden des Halteelements gebildet ist, von denen ein Ende als der Rastkopf mit einer Rastöffnung das andere Ende mit einer Rastzunge derart übergreift, dass die Rastzunge in die Rastöffnung eingreift.

Einen wirksamen Schutz der Rastverbindung bietet eine weitere Ausführung der Haltevorrichtung, bei der die Abdeckung das oder ein im Rastkopf verrastetes Rastmittel, bevorzugt die Rastzunge, von außen unzugänglich abdeckt, so dass auf dieses Rastmittel keine solche Kraft ausgeübt werden kann, die ein Lösen der Rastverbindung mit sich bringen könnte. Zusätzlich von Vorteil ist es hierfür, dass die Abdeckung an dem Haltelement nicht offenbar ausgebildet ist oder die Verbindung hierfür zerstört werden müsste.

Eine stabile Anordnung der Haltevorrichtung an sich wie der Rastverbindung ermöglichen vorteilhafte Ausführungen, bei denen das Halteelement und/oder der Rastkopf aus einem Federstahl, einem glasfaserverstärkten Kunststoff oder einem Duroplast ausgebildet sind.

Eine Weiterbildung der Haltevorrichtung, bei der die Kraft, mit der das Halteelement den Querschnitt des Messrohres umgreift, beeinflusst und/oder zumindest einmalig verstärkt werden kann, sieht vor, dass an dem Halteelement wenigstens zwei in einer Längs- oder Einsteckrichtung voneinander beabstandet angeordnete Rastmittel ausgebildet sind. Die Ausübung einer Zugkraft auf das entsprechende Ende des Halteelements kann dazu führen, dass ein in Einsteckrichtung hinter dem ersten, verrasteten Rastmittel angeordnetes zweites oder weiteres Rastmittel in Eingriff mit dem Rastkopf gelangt und derart eine Rastverbindung herstellt, die die Haltevorrichtung mit erhöhter Kraft ortsfest an dem Messrohr hält. Die Ausbildung mit mindestens zwei Rastmitteln ermöglicht auch eine genaue Anpassung an zwei unterschiedliche Rohrdurchmesser eines Messrohres. Je nach tatsächlichem Rohrdurchmesser ist eines der ausgebildeten Rastmittel nutzbar.

Bei einer Haltevorrichtung zur ortsfesten Anordnung von wenigstens einem Messfühler an einem von einem Medium durchströmten Messrohr, wobei die Haltevorrichtung ein Halteelement aufweist, welches in Gebrauchsstellung das Messrohr umgreift, wobei das Halteelement mittels zumindest einer Rastverbindung zur ortsfesten Anordnung schließbar ist und wobei das Halteelement wenigstens eine Messfühler-Aufnahme für den zumindest einen Messfühler trägt, kann der Messfühler überdies an ein elektrisches Verbindungsmittel anschließbar sein, welches vorzugsweise zur Signalübertragung von vom Messfühler gelieferten Daten bestimmt ist. Um beim ersten oder wiederholten elektrischen Anschluss eines Messfühlers an der Haltevorrichtung eine Vertauschung elektrischer Kontaktierungen zu verhindern und derart eine verbesserte, eindeutige Zuordnung bei der Kontaktierung des Messfühlers zu erreichen, kann erfindungsgemäß die Haltevorrichtung eine Verbindungsmittel-Aufnahme für das elektrische Verbindungsmittel aufweisen, wobei der Messfühler aus der Messfühler-Aufnahme entfernbar ist, ohne dass das Verbindungsmittel aus der Verbindungsmittel-Aufnahme entfernt sein muss. Dies bedeutet, dass die einmal hergestellte elektrische Verbindung der Messfühleraufnahme mit der verbindungsmittel-Aufnahme auch bei Entfernung des Messfühlers aus seiner Aufnahme erhalten bleiben kann.

Dies hat unter anderem den Vorteil, dass ein Messfühler austauschbar ist, ohne dass die Verbindung zwischen dem Verbindungskabel als Verbindungsmittel und der Haltevorrichtung gelöst werden muss. Ein versehentliches Vertauschen der Verbindungskabel bei einem Austausch des Messfühlers ist somit vermeidbar.

In einer bevorzugten Ausführung der Haltevorrichtung kann dies etwa dadurch gewährleistet sein, dass die Verbindungsmittel-Aufnahme in einer Weise auf die Messfühler-Aufnahme ausgerichtet ist, dass bereits durch das Einsetzen in die Verbindungsmittel-Aufnahme der elektrische Anschluss des Verbindungsmittels an den in die Messfühler-Aufnahme eingesetzten Messfühler stattfindet. Besonders bevorzugt kann dabei die Verbindungsmittel-Aufnahme in einer Verlängerung längs einer Einsteckrichtung einer Steckaufnahme an dem in die Messfühler-Aufnahme eingesetzten Messfühler angeordnet sein.

In einfacher Weise lässt sich der Anschluss das Verbindungsmittels auch durch elektrische Verbindung von Messfühler-Aufnahme und Verbindungsmittel-Aufnahme realisieren, die in einer weiteren Ausführung hierfür beispielsweise auch eine gemeinsame Aufnahme bilden können.

Bilden die beiden Aufnahmen in einer Ausführungsform eine gemeinsame Aufnahme, kann diese Aufnahme vorteilhafter Weise durch eine Mehrzahl von Öffnungen zugänglich sein, wobei insbesondere Messfühler und Verbindungsmittel durch Einsetzen in zwei bevorzugt einander an der gemeinsamen Aufnahme gegenüber liegend angeordnete Öffnungen mit einander elektrisch miteinander verbindbar oder verbunden sind. Hierbei ist durch die Lage der Aufnahmen die Richtung einer zusammen führenden oder auch trennenden Steckbewegung vorgegeben.

Innerhalb der gemeinsamen Aufnahme können bei einer Weiterbildung der Haltevorrichtung der Messfühler und das Verbindungsmittel vorteilhaft eine mechanische Verbindung, insbesondere eine Steckverbindung, eingehen. Diese kann zum Beispiel durch entsprechende den beiden Verbindungspartnern zugeordnete Gehäuseformen, die etwa in Gebrauchsstellung an gegenseitigen Eingriffen einen Reibschluss bilden, bis zur Ausübung einer den Reibschluss trennenden Gegenkraft, erhalten bleiben.

Sind an einer Haltevorrichtung Messfühler für eine Mehrzahl beispielsweise unterschiedlicher Messungen vorgesehen, kann es zweckmäßig sein, das oder die Verbindungsmittel und/oder die Haltevorrichtung so auszugestalten, dass unter mehreren verfügbaren Verbindungskabeln die Verbindung nur eindeutig herstellbar ist, weswegen bei einer weiteren Ausführung der erfindungsgemäßen Haltevorrichtung von möglicherweise eigenständiger erfinderischer Qualität die Aufnahme und/oder das Verbindungsmittel zumindest in einem anfänglichen, unbenutzten Auslieferungszustand durch die Anordnung wenigstens eines Kodierelements in einer Mehrzahl von möglichen Kodierpositionen derart kodierbar ist, dass die kodierte Aufnahme nur genau denjenigen Typ von Verbindungsmittel aufnimmt, der zu der jeweiligen Kodierung passt. Die eindeutige Zuordnung wird demnach durch eine spezielle Formgebung insbesondere der verbindungsmittel-Aufnahme erreicht. Hierdurch ist es im Prinzip auch möglich, beispielsweise das Verbindungsmittel universell zu gestalten und eine Zuordnung zu einem bestimmten Messfühler über Kodierung der von dem Verbindungsmittel versorgten Aufnahme vorzusehen.

Auf diese Weise ist also erreichbar, dass eine universelle Formgestaltung eines Steckers und eines Gegensteckers oder Gegensteckteils durch Einsetzen eines Kodierungselements individuell auf das jeweilige andere Teil abstimmbar ist. Dieser Aspekt der Erfindung entfaltet seine vollen Vorteile insbesondere dann, wenn die Haltevorrichtung unlösbar an dem Messrohr befestigt ist.

Eine bevorzugte Ausgestaltung der Haltevorrichtung kann dabei die Verbindungsmittel-Aufnahme mit einem bevorzugt im wesentlichen rechteckigen Querschnitt mit voneinander verschiedenen Längs- und Querseiten vorsehen, in dessen Eckbereichen sich Rücksprünge befinden, die sich zwischen einander gegenüberliegenden Öffnungen der Verbindungsmittel-Aufnahme erstrecken. Diese Rücksprünge treten zu dem im Wesentlichen rechteckigen Querschnitt hinzu und verändern die Formgebung des Eckbereichs in Erstreckung der Aufnahme. In Gebrauchsstellung fasst der Eckbereich dabei einen Teilbereich des Kodierelements ein.

Zweckmäßiger Weise kann in einer Ausgestaltung der Haltevorrichtung das wenigstens eine Kodierelement gemeinsam mit einem Stecker des elektrischen Verbindungsmittels in die Verbindungsmittel-Aufnahme steckbar sein, wobei zumindest ein Axialabschnitt des Stecker im Wesentlichen den Querschnitt der Verbindungsmittel-Aufnahme ausfüllt.

Dabei weist bevorzugt wiederum der Querschnitt des Axialabschnitts in wenigstens einem Eckbereich einen vorzugsweise rechteckigen Rücksprung auf, der sich in Gebrauchsstellung mit dem oder einem gegenüberliegenden, ebenfalls vorzugsweise rechteckigen, Rücksprung der Verbindungsmittel-Aufnahme zum Querschnitt des wenigstens einen Kodierelements ergänzt. Durch das in die Aufnahme gesteckte und dort festgehaltene Kodierelement lässt sich vorteilhaft und in eindeutiger weise nur noch ein komplementär geformter Stecker in der betreffenden Ausnehmung platzieren. Es sind auch andere Querschnitte des Kodierelements mit den an dem Verbindungsmittel bzw. der Aufnahme vorzusehenden komplementären Formgebungen denkbar.

In einer Weiterbildung der Haltevorrichtung kann sodann das wenigstens eine Kodierelement gemeinsam mit dem Stecker des elektrischen Verbindungsmittels in die Aufnahme steckbar und dort unlösbar oder unverlierbar varriegelbar, insbesondere verrastbar, sein. Durch entsprechende Anordnung des Kodierelements kann eine an der Haltevorrichtung angeordnete Aufnahme also durch den Anwender beim Erstgebrauch nach wunsch kodiert werden und behält dann zukünftig diese Kodierung.

Besonders günstig kann hierbei überdies der Umstand sein, dass das Verbindungskabel und/oder die Haltevorrichtung durch eine Formgebung der Kabelaufnahme so ausgestaltet sind, dass unter mehreren verfügbaren Verbindungskabeln die Verbindung nur eindeutig herstellbar ist.

Um dem Anwender die entsprechende Möglichkeit zur Kodierung einer an der Haltevorrichtung angeordneten Aufnahme auf ein Verbindungsmittel in Form eines bestimmten Verbindungskabels bei der Montage der Haltevorrichtung zur Verfügung zu stellen, kann eine Weiterbildung der Haltevorrichtung vorsehen, das wenigstens eine Kodierelement in dem Auslieferungszustand an dem Halteelement oder dem elektrischen Verbindungsmittel lösbar, insbesondere einstückig mit einer Solltrennstelle, anzuordnen.

Eine mögliche vorteilhafte Ausgestaltung kann dann darin bestehen, dass das Kodierelement in dem Auslieferungszustand an dem Halteelement oder dem elektrischen Verbindungsmittel angespritzt ist und insbesondere die Solltrennstelle durch eine Materialschwächung des gespritzten Kunststoffs gebildet ist. Der Anwender kann das Kodierelement etwa durch Abreißen oder Abdrehen von dem Halteelement oder dem elektrischen Verbindungsmittel trennen und unmittelbar zum Einsatz bringen, indem er es beispielsweise erstmalig mit dem Verbindungsmittel in die entsprechende Aufnahme führt und verrastet und anschließend die Verbindung mit dem zu der jeweiligen Messung vorgesehenen Messfühler herstellt.

In einer zweckmäßigen Ausführung der Erfindung ist in dem Halteelement eine nach innen vorstehende Haltekante ausgebildet, die ein Verdrehen und/oder verschieben des Halteelements gegenüber einem Rohr verhindert. Diese Haltekante kann sich beim Befestigen des Halteelements in das Material des umfassten Rohres eingraben, um so eine Verdrehsicherung und/oder eine Verschiebesicherung zu erreichen.

Damit das Halteelement gegen ein Verdrehen und Verschieben gesichert ist, ist es beispielsweise zweckmäßig, wenn wenigstens zwei Haltekanten in versetzten Ausrichtungen ausgebildet sind. Dazu ist insbesondere eine Haltekante quer und die andere Haltekante längs der Rohrrichtung ausgerichtet. Es können alternativ oder zusätzlich einander gegenüberliegende Haltekanten ausgebildet sein, mit welchen ein Verdrehen in zwei einander entgegengesetzten Richtungssinnen verbindbar ist.

In einer bevorzugten Ausführung der Erfindung weist das Halteelement wenigstens eine Haltezunge auf, an deren freien Ende eine Haltekante, insbesondere die bereits erwähnte Haltekante, ausgebildet ist. Die Haltezunge kann beispielsweise in einem Stanzbiegeprozess aus dem Halteelement geformt sein.

Eine weitere vorteilhafte Ausführung der Erfindung sieht vor, dass die Haltekante als geschlossen umlaufende Linie ausgebildet ist, wodurch das Halteelement sogar allseitig gegen Verdrehen und Verschieben gesichert ist. Eine solche umlaufende Haltekante kann beispielsweise durch eine kreisförmige Stanzkante gebildet sein.

Insbesondere vorteilhaft ist es, wenn mehrere Haltekanten vorhanden sind. Dabei ist es auch möglich verschiedene Ausführungsformen miteinander zu kombinieren.

In analoger Weise zu der zuvor beschriebenen Haltevorrichtung wird die Aufgabe, ein verbessertes System zur Verfügung zu stellen, das eine Vertauschung bei der Kontaktierung des Messfühlers mit dem an der Haltevorrichtung anzuordnenden oder angeordneten Verbindungsmittel vermeidet, auch gelöst durch die Verwendung eines Kodierelements zur Kodierung der bereits beschriebenen Steckverbindung zwischen einem Verbindungsmittel und einer Verbindungsmittel-Aufnahme einer Haltevorrichtung. Wie beschrieben wird hierbei das Kodierelement zu einer Kodierung des Verbindungsmittels auf die verbindungsmittel-Aufnahme an dem Verbindungsmittel oder der Verbindungsmittel-Aufnahme angeordnet, das Kodierelement ist überdies in einem Auslieferungszustand zunächst lösbar, vorzugsweise einstückig mit einer Solltrennstelle, an dem nicht zu kodierenden Verbindungsmittel oder der nicht zu kodierenden Verbindungsmittel-Aufnahme ausgebildet und das Kodierelement wird anschließend zur Kodierung gelöst und mit dem zu kodierenden Verbindungsmittel oder der zu kodierenden Verbindungsmittel-Aufnahme vorzugsweise unlösbar oder unverlierbar verbunden. Bei der betreffenden Verwendung ist das Kodierelement demnach zunächst im Auslieferungszustand mit dem nicht zu kodierenden Teilelement und nach seiner Trennung von diesem in der Lage, das jeweils andere Teilelement einer Mittel/Aufnahme-Verbindung zu kodieren, und verbleibt an dem jeweiligen Element unlösbar, so dass die einmal erfolgte Kodierung erhalten bleibt.

Insoweit trägt auch ein Befestigungsset zur ortsfesten Anbringung von wenigstens einem Messfühler an einem Messrohr mit einer Haltevorrichtung, die wenigstens ein Halteelement mit zumindest einer Aufnahme, einen Messfühler, ein Verbindungsmittel und ein Kodierelement aufweist, zur Verbesserung, weil Vereinfachung eines Messsystems zur ortsfesten Anordnung an dem Messrohr bei, da ein Anwender alle notwendigen Teile, um ein kodierbare, an dem jeweiligen Messrohr zuverlässig festzulegende Haltevorrichtung zu installieren, an die Hand bekommt.

Die erfindungsgemäße Haltevorrichtung wird nachstehend anhand von Ausführungsbeispielen in der Zeichnung näher erläutert. In teilweise schematisierter Darstellung zeigen hierbei die
- Fig. 1: eine perspektivische Ansicht eines ersten Ausführungsbeispiels der Haltevorrichtung mit einem Halteelement, das in Gebrauchsstellung ein Messrohr umgreift und einem in einer Messfühler-Aufnahme aufgenommenen Messfühler;
- Fig. 2: eine perspektivische Ansicht eines weiteren Ausführungsbeispiels der Haltevorrichtung mit einem Halteelement, einer Rastverbindung und einer Abdeckung;
- Fig. 3: eine perspektivische Ansicht der Rastverbindung des Halteelements aus der Fig. 2;
- Fig. 4: eine teilgeschnittene perspektivische Ansicht der Haltevorrichtung aus der Fig. 2 mit Abdeckung;
- Fig. 5: eine perspektivische Ansicht der Haltevorrichtung aus den Fig. 2 und 4 ohne Abdeckung;
- Fig. 6: eine teilgeschnittene perspektivische Ansicht der Darstellung aus der Fig. 5;
- Fig. 7,8: perspektivische Ansichten der Haltevorrichtung mit den Belagteilen mit (Fig. 7) und ohne (Fig. 8) Messrohr;
- Fig. 9-12: perspektivische Ansichten dar Haltevorrichtung aus der Fig. 1 im Ganzen oder im Ausschnitt ohne Abdeckung (Fig. 9, 10), mit explodiert dargestellter Abdeckung (Fig. 11) und mit Abdeckung in Gebrauchsstellung (Fig. 12) und ohne Abdeckung;
- Fig. 13: eine perspektivische Ansicht eines weiteren Ausführungsbeispiels der Rastverbindung an dem Halteelement mit mehreren Rastmitteln;
- Fig. 14: eine teilgeschnittene perspektivische Ansicht eines ersten Ausführungsbeispiels des Halteelements aus der Fig. 13;
- Fig. 15: eine perspektivische Ansicht der Haltevorrichtung aus den Fig. 1, 9-12 mit einer gemeinsamen Aufnahme, in der ein Messfühler und ein Verbindungsmittel aufgenommen sind;
- Fig. 16: eine perspektivische Ansicht der Aufnahme aus der Fig. 15 mit unbestückter Aufnahme

- Fig. 17,18: perspektivische Ansichten des Verbindungselements aus der Fig. 15 mit daran im Auslieferungszustand angeordnetem Kodierelement (Fig, 17) und gelöstem Kodierelement (Fig. 18);
- Fig. 19: das Verbindungsmittel aus der Fig. 15 in vier verschiedenen Positionen mit dem jeweils zugeordneten Kodierelement als Möglichkeiten, das Verbindungsmittel in einer Aufnahme, wie sie in der Fig. 16 dargestellt ist, anzuordnen;
- Fig. 20: eine perspektivische Ansicht eines Ausführungsbeispiels der Haltevorrichtung mit einem Halteelement, einem Messfühler und einem Verbindungsmittel in explodierter Darstellung;
- Fig. 21: die Haltevorrichtung aus der Fig. 20 mit in der gemeinsamen Aufnahme kontaktierten Verbindungspartnern;
- Fig. 22: die Anordnung der Fig. 21 ohne Wände der Aufnahme;
- Fig. 23: ein Halteelement mit mehreren Haltezungen und
- Fig. 24: ein Halteelement mit mehreren umlaufend geschlossenen Haltekanten.

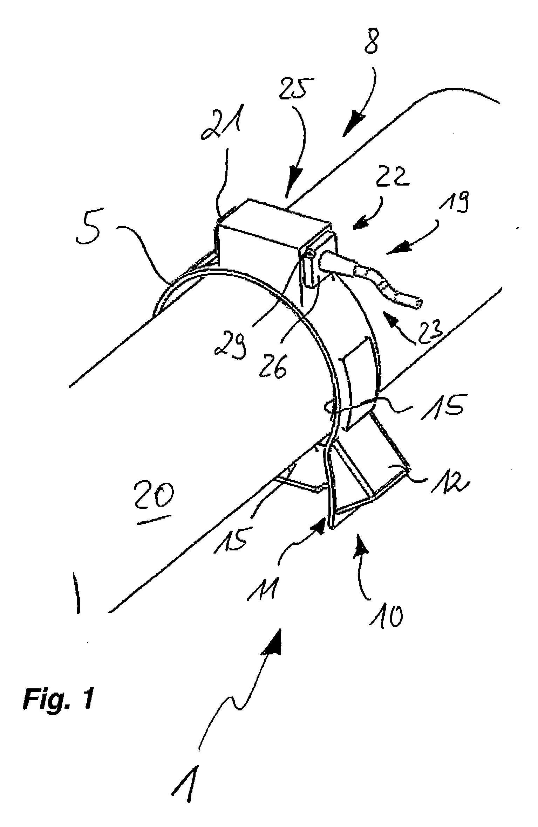

In der Fig. 1 erkennt man eine im Ganzen mit 1 bezeichnete Haltevorrichtung, die ersichtlich zur ortsfesten Anordnung eines Messfühlers 21 an einem von einem Medium durchströmten Messrohr 20 mit in diesem Fall kreisrundem, in weiteren Fällen auch anders geformtem Querschnitt vorgesehen ist. Die Haltevorrichtung 1 weist dabei ein Halteelement 5 auf, welches in der in der Fig. 1 dargestellte Gebrauchsstellung das Messrohr 20 umgreift, hierbei das Halteelement 5 mittels zumindest einer Rastverbindung 10 zur ortsfesten Anordnung schließbar ist. Überdies trägt das Halteelement 5 eine Messfühler-Aufnahme 25 für den zumindest einen Messfühler 21.

An dem Halteelement 5 der erfindungsgemäßen Haltevorrichtung 1 in der Fig. 1 ist wenigstens ein die Rastverbindung 10 herstellender Rastkopf 11 vorgesehen, der mit einer Abdeckung 12 versehen ist, die ein Lösen der Rastverbindung 10 verhindert, zudem ist in der gezeigten Gebrauchsstellung von Haltevorrichtung 1 bzw. Halteelement 5 zwischen dem umgriffenen Messrohr 20 und dem Halteelement 5 eine Mehrzahl nachgiebiger Belagteile 15 angeordnet, die am Umfang des Messrohres verteilt sind. Die Rastverbindung 10 an der Haltevorrichtung 1 der Fig. 1 wir da bei weiter unten noch genauer dargestellt.

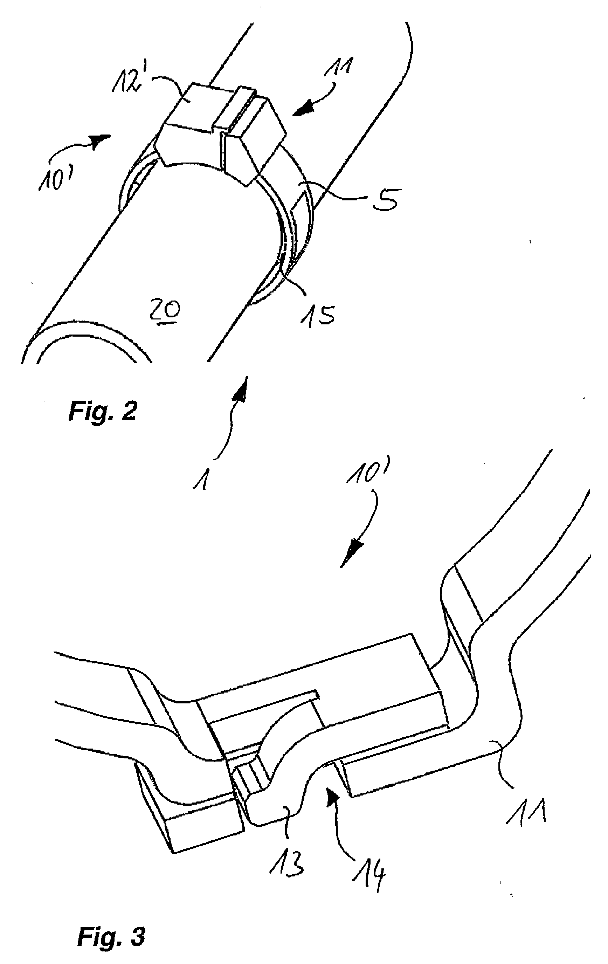

In den Fig. 2-6 ist ein zweites Ausführungsbeispiel einer erfindungsgemäßen Haltevorrichtung 1 gezeigt, das eine andere Rastverbindung 10` verwendet. Auch bei dieser wiederum zur ortsfesten Anordnung eines Messfühlers 21 an einem von einem Medium durchströmten Messrohr 20 vorgesehenen Haltevorrichtung 1 erkennt man ein Halteelement 5, welches das Messrohr 20 umgreift, wobei das Halteelement 5 mittels zumindest einer Rastverbindung 10 zur ortsfesten Anordnung schließbar ist. Nicht zu erkennen, da in der Darstellung der Fig. 2 dem Betrachter abgewandt, ist die Messfühler-Aufnahme 25 für den zumindest einen Messfühler 21. Gut zu erkennen ist dafür, dass auch an diesem Halteelement 5 wenigstens ein die Rastverbindung 10 herstellender Rastkopf 11 vorgesehen 11 ist, der mit einer Abdeckung 12 versehen ist, die ein Lösen der Rastverbindung 10 verhindert. Außerdem ist in der gezeigten Gebrauchsstellung von Haltevorrichtung 1 bzw. Halteelement 5 zwischen dem umgriffenen Messrohr 20 und dem Halteelement 5 eine Mehrzahl nachgiebiger Belagteile 15 angeordnet, die am Umfang des Messrohres 20 verteilt sind.

Erkennbar ist in allen Darstellungen des Halteelements 5 bzw. der Haltevorrichtung 1, das die Belagteile 15 jeweils in Verbindungsrichtung zwischen dem jeweiligen Messrohr 20 und dem Halteelement 5 und damit in einer von dem Halteelement 5 abragenden Dimension nachgiebig oder sogar elastisch ausgebildet sind. Hierbei ist die nachgiebige Ausgestaltung der Belagteile 15 so dimensioniert, dass ein Einrasten der jeweiligen Rastverbindung 10, 10` und ein kraftschlüssiges Umgreifen des Messrohrs 20 durch das Halteelement 5 ermöglicht ist. Außerdem ist das jeweilige Halteelement 5 aus wenigstens einem Metallband gebildet, mit welchem die Belagteile 15 durch Anspritzen verbunden sind.

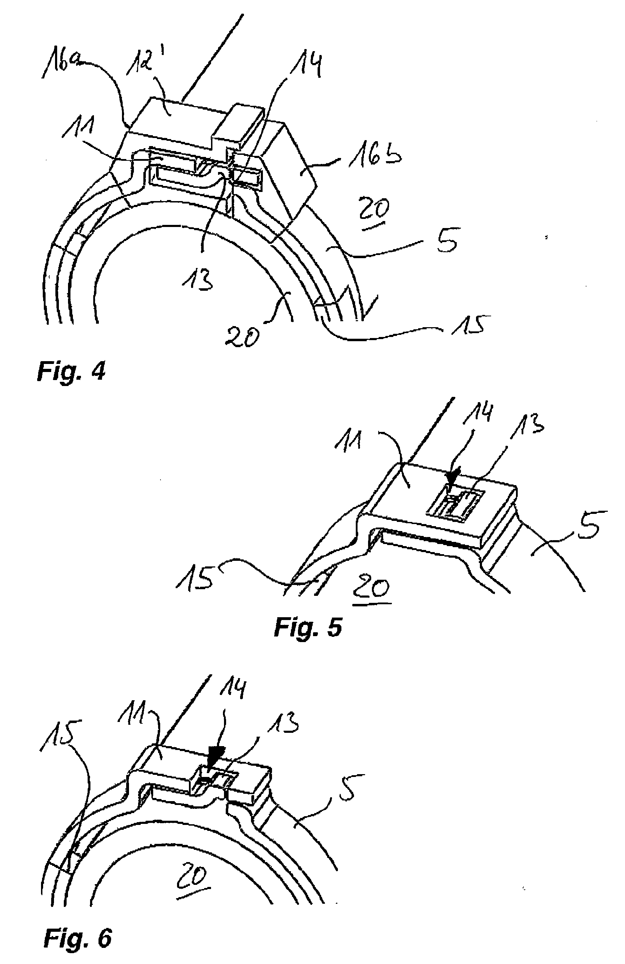

In der Fig. 3 ist die Rastverbindung 10' aus der Fig. 2 zu erkennen, welche das dortige Halteelement 5 beim Umgreifen des Messrohres 20 verschließt, wobei die Rastverbindung 10' durch das Zusammenwirken des Rastkopfs 11 an einem der Enden des Halteelements 5 mit einer Rastzunge 13 gebildet wird. Hierfür ist an dem Rastkopf 11 eine Ausnehmung als Rastöffnung 14 gebildet, in welche die Rastzunge 13 beim Übergreifen durch den Rastkopf eingreift und dadurch die Enden des Halteelements 5 verrastet, Eine Innenwand der Rastöffnung 14 ist bei Verrastung in Kontakt mit dem Ende der Rastzunge 13 und verhindert ein Öffnen der Rastverbindung unter Zugbelastung. In der Fig. 3 erkennt man dabei einen Schnitt des verrasteten Rastkopfs 11, in der Fig. 4 ist die betreffende Rastverbindung 10` im Schnitt an dem Messrohr 20 angeordnet zu erkennen, abgedeckt von der Abdeckung 12`. An der Abdeckung 12' erkennt man, dass deren Abdeckungsteile für das jeweils andere Teil einen Anschlag beim Verrasten bilden und gleichzeitig an der Außenwand Handhabungsflächen 16a, 16b vorgesehen sind, die eine Ergreifen der Enden des Halteelements 5 und damit den Vorgang des Verrastens der Rastverbindung 10' erleichtern.

In nicht geschnittener Darstellung, aber geschlossen erkennt man die vollständige Rastverbindung 10` an dem Halteelement 5, das das Messrohr 20 umgreift, in der Fig. 5, die verdeutlicht, dass die Rastöffnung 14 nicht randoffen ist, sondern einen geschlossenen Rand aufweist, und sich die Rastzunge 13 mit ihrer Breite vollständig zwischen zwei gegenüberliegenden wänden der Rastöffnung 14 des Rastkopfs 11 erstreckt. Das Ende des Halteelements 5 mit dem Rastkopfs 11 übergreift das Ende des Halteelements 11 mit der Rastzunge, es ist also die Rastverbindung 10 durch zwei freie Enden des Halteelements 5 gebildet, von denen ein Ende als der Rastkopf 11 mit einer Rastöffnung 14 das andere Ende mit einer Rastzunge 13 derart übergreift, dass die Rastzunge 13 in die Rastöffnung 14 eingreift. In geschnittener Ansicht sieht man dies nochmals in der Fig. 6.

Insbesondere in den Fig. 2 und 6 erkennt man, wie im übrigen auch in den Fig. 1, 11 und 12, dass die Abdeckung 12, 12` das oder ein im Rastkopf 11 verrastetes Rastmittel, bevorzugt die Rastzunge 13, von außen unzugänglich abdeckt. Durch Anformung an dem Rastkopf 11 ist die jeweilige Abdeckung 12, 12' an dem Haltelement 5 nicht öffenbar ausgebildet, so dass die jeweilige Rastverbindung 10, 10` optimal geschützt ist. In den gezeigten Darstellungen der Fig. 1 bis 12 sind das Halteelement 5 und die Abdeckung 12, 12` aus einem glasfaserverstärkten Kunststoff ausgebildet.

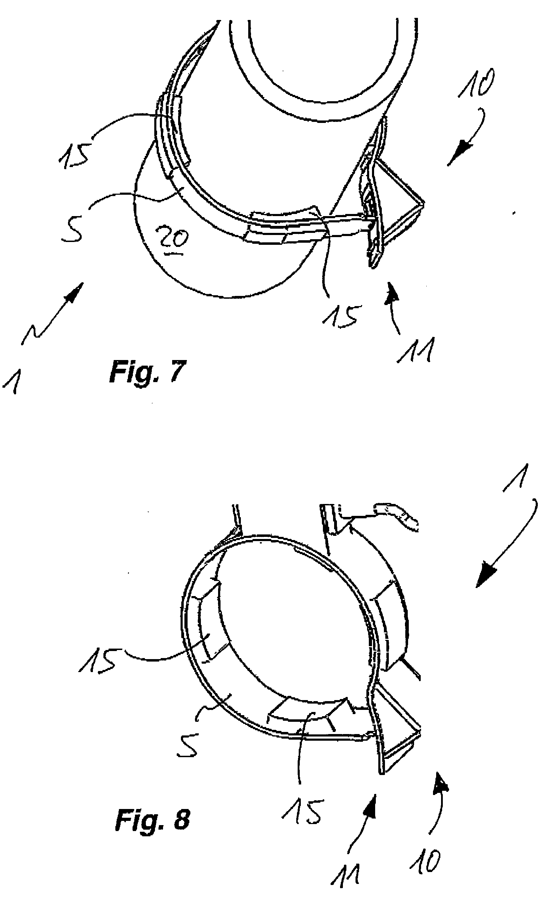

In den Fig. 7 ist die Haltevorrichtung 1 mit dem Halteelement 5 in einer Anordnung an dem Messrohr 20 gezeigt, die die Belagteile 15 gut erkennen lässt. Dabei sieht man, dass die Belagteile 15 gleichmäßig an dem Innenumfang des Halteelements 5 der Haltevorrichtung 1 verteilt sind. Die Belagteile verhindern ein Verrutschen oder Verdrehen der Haltevorrichtung 1 an dem Messrohr. In gewissen Grenzen wir bei der Formgebung der Belagteile die Krümmung des umgriffenen bzw. zu umgreifenden Messrohres nachvollzogen, an das die Belagteile in Gebrauchsstellung der Haltevorrichtung 1 angedrückt sind. Die Fig. 8 zeigt die Haltevorrichtung der Fig. 7 ohne das Messrohr.

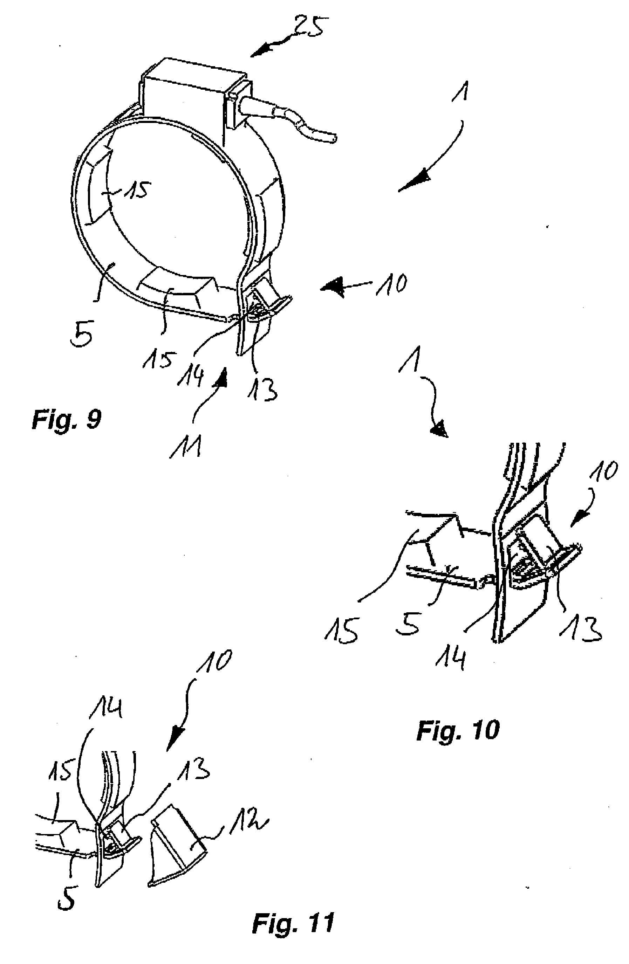

In der Fig. 9 erkennt man erneut die Haltevorrichtung 1 mit dem Halteelement 5 aus der Fig. 1 ohne das Messrohr 20, so dass die am Innenumfang des Halteelements 5 angeordneten Belagteile 15 gut zu erkennen sind. Durch das Weglassen der Abdeckung 12 erkennt man die Rastverbindung 10 mit der Rastöffnung 14 gut. Durch die Rastöffnung 14 greift das mit der Rastzunge 13 versehene Ende des Halteelements 5. Die Rastzunge 13 ist gegenüber der Steckrichtung des Endes derart abgewinkelt, dass das freie Ende der Rastzunge 13 bei Belastung gegen die Steckrichtung in Anlage mit einem Rand der Rastöffnung 13 steht und ein Öffnen der Rastverbindung 10 verhindert. Fig. 10 zeigt diesen Umstand als Ausschnitt in größerer Detailgenauigkeit.

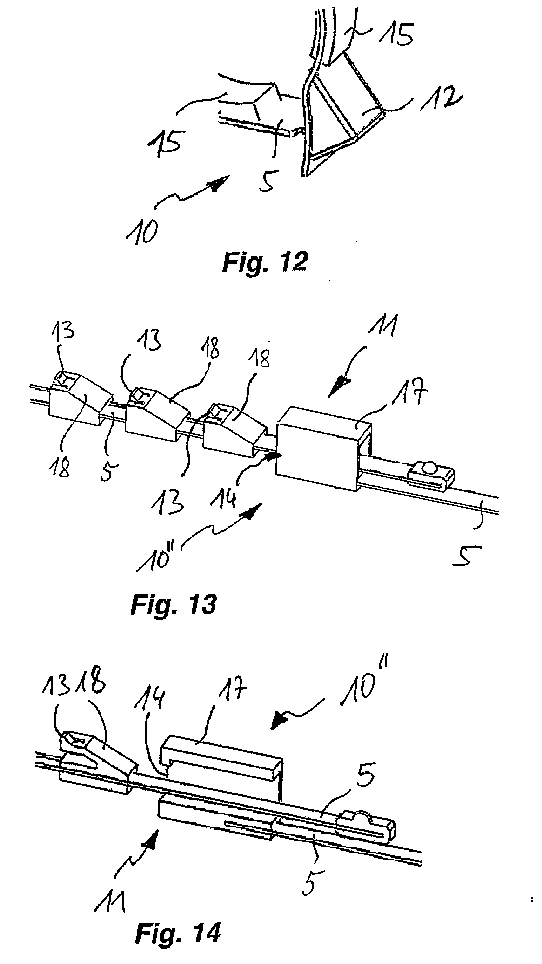

In der Fig. 11 sieht man zusätzlich zur Verdeutlichung von deren Schutzfunktion die Abdeckung 12 in explodierter Position bezüglich der Rastverbindung 10. Die Detaildarstellung der Fig. 10 und 11 wird durch eine in ihrer Gebrauchsstellung die Rastverbindung 10 schützende Abdeckung 12 in der Fig. 12 vervollständigt. Hierdurch ist die vor einem Lösen geschützte Rastverbindung auch der direkten Ansicht entzogen.

In den Fig. 13 und 14 erkennt man eine alternative Ausgestaltung der Rastverbindung 10'', bei der das Halteelement 5 aus einem Federstahl ausbildet ist, während Rastkopf und Rastzungen aus einem an dem Halteelement 5 angespritzten Kunststoff gebildet sind. Der Rastkopf 11 ist dabei mit einem Gehäuse 17 gebildet, das die Rastöffnung aufweist. An der Erstreckung des Halteelements 5 sind dabei in gleichmäßigem Abstand mehrere Rastelemente 18 angeordnet sind, deren in Einsteckrichtung rückwärtige Enden jeweils eine Rastzunge 13 bilden, die mit einem Vorsprung 19 der Rastöffnung 14 in Gebrauchsstellung verrasten. Insoweit sind an dem Halteelement 5 mehrere in Längs- oder Einsteckrichtung voneinander beabstandet angeordnete Rastmittel ausgebildet.

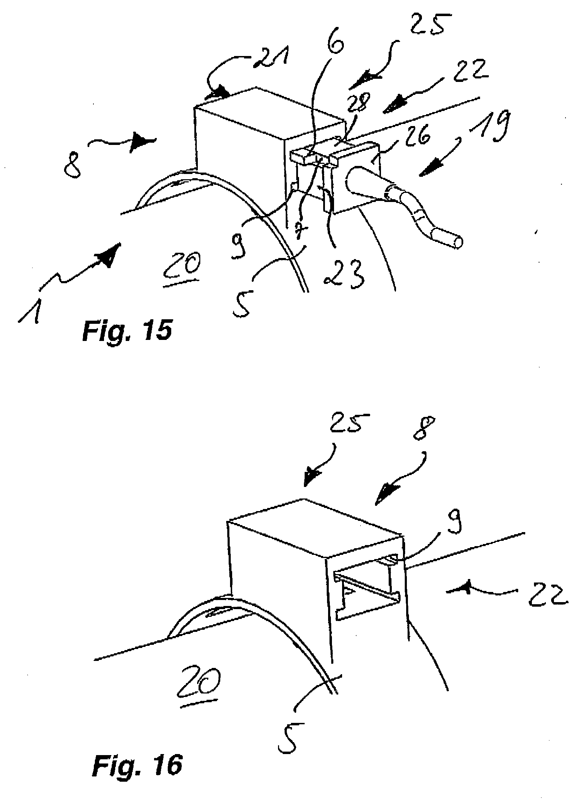

In der Fig. 15 ist die Haltevorrichtung 1 aus den Fig. 1 sowie 9 bis 12 mit ihrem Halteelement 5 gezeigt, wobei der Bereich der Rastverbindung 10, mittels derer das Halteelement 5 an dem Messrohr 20 fixierbar ist, nicht dargestellt ist. Das Halteelement 5 trägt eine Messfühler-Aufnahme 25, in welcher, dem Betrachter der Fig. 15 abgewandt und daher nicht erkennbar, ein Messfühler 21 angeordnet ist. Gleichzeitig ist an der Haltevorrichtung 1 eine verbindungsmittel-Aufnahme 22 für das elektrische Verbindungsmittel 19 zu erkennen, in welche das elektrische Verbindungsmittel 19 einsteckbar ist, wodurch der Messfühler 21 an das elektrische Verbindungsmittel 19 angeschlossen werden kann. Hierfür ist das elektrische Verbindungsmittel 19 an seinem freien Ende mit einem Stecker 23 versehen, der in der Fig. 15 noch nicht in seiner verbindenden Steckposition steckt. Gleichzeitig ist die Messfühler-Aufnahme 25 so gestaltet, dass der Messfühler 21 aus der Messfühler-Aufnahme 25 entfernbar ist, ohne dass das Verbindungsmittel 19 aus der Verbindungsmittel-Aufnahme 22 entfernt sein muss. Weiter erkennt man, dass die Verbindungsmittel-Aufnahme 22 so auf die Messfühler-Aufnahme 25 ausgerichtet ist, dass das Verbindungsmittel 19 durch Einsetzen in die Verbindungsmittel-Aufnahme 22 an den in die Messfühler-Aufnahme 25 eingesetzten Messfühler 21 elektrisch angeschlossen wird, da, wie in der Fig. 15 zu erkennen ist, die Verbindungsmittel-Aufnahme 22 in einer Verlängerung längs einer Einsteckrichtung an dem in die Messfühler-Aufnahme 25 eingesetzten Messfühler 21 angeordnet ist.

Durch an den jeweiligen Steckerenden von Messfühler 21 und elektrischem Verbindungsmittel 19 angeordnete elektrische Kontakte 24, 24' sind die Messfühler-Aufnahme 25 und die Verbindungsmittel-Aufnahme 22 elektrisch miteinander verbunden sind und bilden auch eine gemeinsame Aufnahme 8.

Ersichtlich ist die gemeinsame Aufnahme 8, wie sie in den Fig. 15 bis 22 gut zu sehen ist, gewissermaßen durch Zusammensetzen der Verbindungsmittel-Aufnahme 22 und der Messfühler-Aufnahme 25 gebildet, wobei der Messfühler 21 und das Verbindungsmittel 19 in ihre jeweiligen Öffnung eingesetzt sind, die Öffnungen der gemeinsamen Aufnahme 8 einander also gegenüber liegen. In ihren jeweiligen Aufnahmen 22, 25 und damit in der gemeinsamen Aufnahme 8 aufgenommen gehen der Messfühler 21 und das Verbindungsmittel 11 innerhalb der gemeinsamen Aufnahme 8 eine mechanische Verbindung in Form einer Steckverbindung ein, wie sich besonders gut aus den Fig. 15, 20 und 22 ergibt. Die gemeinsame Aufnahme 8 ist ohne Anordnung weiterer Teile alleine mit dem Halteelement 5 in der Fig. 16 zu sehen. Dabei erkennt man gut, dass in jeder Ecke des öffnungsquerschnitts der Verbindungsmittel-Aufnahme 22 ein Rücksprung 9 angeordnet ist.

Bereits in der Fig. 15 erkennt man, dass die Verbindungsmittel-Aufnahme 22 und das Verbindungsmittel 19 durch die Anordnung wenigstens eines Kodierelement 6 in einer Mehrzahl von möglichen Kodierpositionen in einer Art und Weise kodierbar ist, dass die kodierte Aufnahme nur genau denjenigen Typ von Verbindungsmittel 19 aufnimmt, der zu der jeweiligen Kodierung passt. Man erkennt hierzu, dass die Verbindungsmittel-Aufnahme 22 einen im wesentlichen rechteckigen Querschnitt mit voneinander verschiedenen Längs-und Querseiten aufweist, in dessen Eckbereichen sich jeweils ein Rücksprung 9 befindet, der sich entlang der Einsteckrichtung der Verbindungsmittel-Aufnahme 22 erstreckt.

Das stab- oder balkenartige Kodierelement 6 selbst hat dabei einen rechteckigen Querschnitt und ist gemeinsam mit dem Stecker 23 des elektrischen Verbindungsmittels 19 in die vorbindungsmittel-Aufnahme 22 steckbar. Dabei füllt zumindest ein Axialabschnitt 28 des Steckers 23 im Wesentlichen den Querschnitt der Verbindungsmittel-Aufnahme 22 aus. Außerdem erkennt man, insbesondere aus den Fig. 15 bis 22, dass der jeweilige Querschnitt des Axialabschnitts in wenigstens einem Eckbereich einen vorzugsweise rechteckigen Rücksprung 7 aufweist, der sich in Gebrauchsstellung mit dem oder einem gegenüberliegenden, vorzugsweise rechteckigen, Rücksprung 9 der Verbindungsmittel-Aufnahme 22 bzw. der gemeinsamen Aufnahme 8 zum Querschnitt des Kodierelements 6 ergänzt. Zu erkennen ist in den erwähnten Figuren überdies, dass der axiale Abschnitt 28 des Steckers 23 des elektrischen verbindungsmittels 19 an seinem in Gebrauchsstellung dem Messfühler 21 abgewandten Ende einen axialen Anschlag 26 aufweist, der den Eingriff in die Verbindungsmittel-Aufnahme 22 begrenzt.

In dem Eckbereich, in dem der Axialabschnitt 28 des Steckers 23 jeweils seinen Rücksprung 7 aufweist, ist an dem axialen Anschlag 28 eine wiederum rechteckige Ausnehmung 29 vorgesehen, die dem Benutzer mit nur einem Blick von außen klar macht, wie das Verbindungsmittel 19 und damit dessen verbindungsmittel-Aufnahme 22 und damit die gemeinsame Aufnahme 8 kodiert ist.

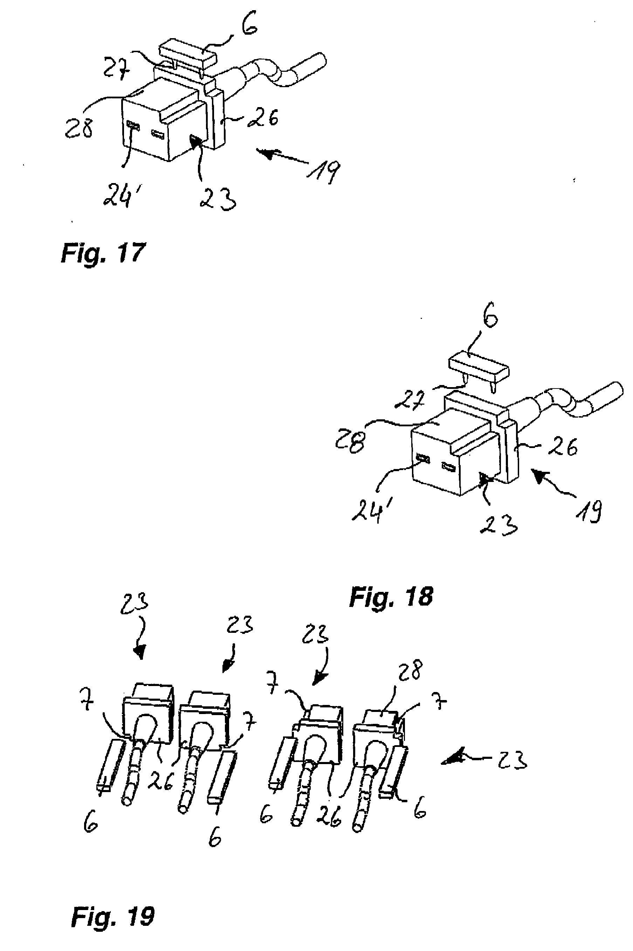

Die Fig. 19 zeigt hierzu vier mögliche Anordnungen eines Steckers 23 mit dem Kodierelement 6 in einer Verbindungsmittel-Aufnahme 22 bzw. gemeinsamen Aufnahme 8. Auf diese weise ist entsprechend erreichbar, dass eine universelle Formgestaltung eines Steckers 23 und eines Gegensteckers oder Gegensteckteils durch Einsetzen eines Kodierungselements 6 individuell auf das jeweilige andere Teil abstimmbar ist.

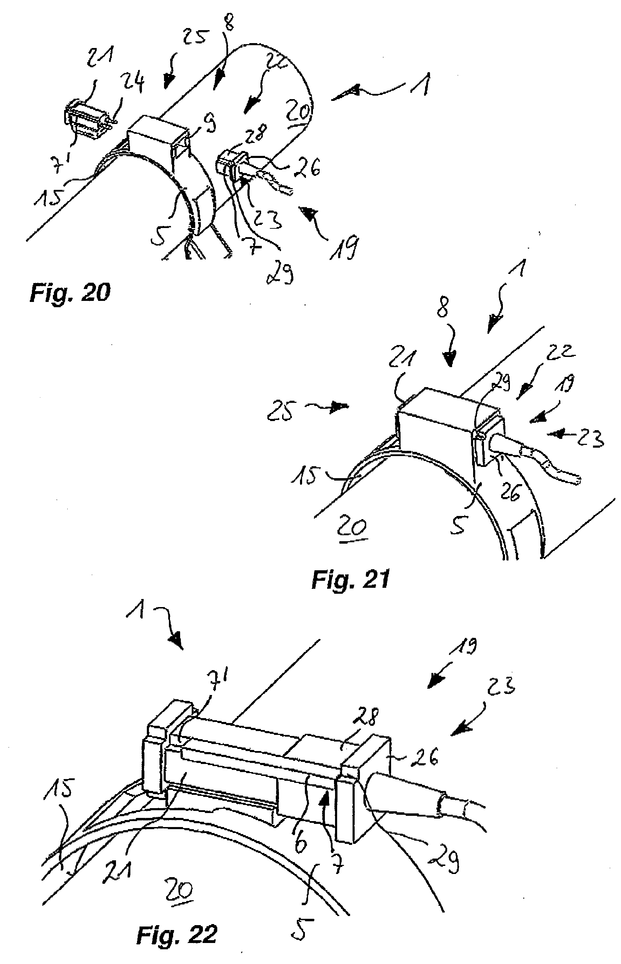

Insbesondere den Fig. 17 und 18 entnimmt man, dass das Kodierelement 6 gemeinsam mit dem Stecker 23 des elektrischen Verbindungsmittels 19 in die Aufnahme steckbar und dort unlösbar oder unverlierbar verriegelbar, insbesondere verrastbar, ist. Hierzu erkennt man auch die buchsenartigen elektrischen Kontakte 24' des elektrischen Verbindungsmittels 19, die mit den Kontakten 24 des Messfühlers 21, die man in der Fig. 20 sieht, bei Zusammenstecken und verrasten der Stecker 23 mit ihren Gegenstücken kontaktiert werden. Das Kodierelement 6 ist in diesem Fall an dem elektrischen Verbindungsmittel 19 lösbar, und zwar einstückig mit einer Solltrennstelle, angeordnet, in der Fig. 17 mit dem Verbindungsmittel 19 verbunden, in der Fig. 18 von diesem gelöst. Es ist dabei an dem elektrischen Verbindungsmittel angespritzt und insbesondere die Solltrennstelle durch eine Materialschwächung 27 des gespritzten Kunststoffs gebildet. Durch Abknicken lässt sich das Kodierelement 6 von dem Stecker 23 lösen und zusammen mit dem Stecker 23 des Verbindungsmittels 19 in die zugeordnete Aufnahme 22 einführen.

Die betreffende Verbindungsmittel-Aufnahme 22 bzw. die gemeinsame Aufnahme 8 mit gestecktem Messfühler 21 und gestecktem elektrischen Verbindungsmittel 19 an dem Halteelement 5 der Haltevorrichtung 1, die an dem Messrohr 20 ortsfest gehalten angeordnet ist, sind in der Fig. 21 zu erkennen, wobei die einander zugewandten, gesteckten und miteinander in Gebrauchsstellung verrasteten Enden des Messfühler 21 und des elektrischen Verbindungsmittels 19 von den Wänden der Aufnahme 8 in der Fig. 21 einer Betrachtung entzogen sind. Ebenfalls in Gebrauchsstellung erkennt man Messfühler 21 und elektrisches Verbindungsmittel 19 an der Haltevorrichtung 1 mit Halteelement 5 unter Weglassung der Aufnahme 8, so dass die Verbindung der beiden elektrischen Partner an der Haltevorrichtung 1 besonders gut einsehbar ist. Dabei besonders gut zu erkennen ist die Anordnung der Rücksprünge 7, 7' an Verbindungsmittel 19 bzw. Messfühler 21, in welche das Kodierelement 6 in seiner Gebrauchsstellung eingreift. Die in der Fig. 22 nicht zu sehende Aufnahme 8 mit den Rücksprüngen 9 ergänzen das von dem Kodierelement 6 eingenommene Volumen. Die dargestellte Aufnahme 8 bzw. Messfühler-Aufnahme 25 ist also auf eine solche Art und Weise kodiert und kann daher nur durch einen solchen Messfühler 21 elektrisch kontaktiert werden, der in Steckrichtung in seiner rechten oberen Ecke den Rücksprung 7' aufweist, der mit dem Kodierelement 6 in Gebrauchsstellung in Eingriff steht.

In Fig. 13 ist außerdem noch dargestellt, dass das Halteelement 5 mehrere hintereinander angeordnete Rastmittel - hier Rastzungen 13 - aufweisen kann. Jedes Rastmittel ist hierbei für eine Befestigung an einem individuellen Rohrdurchmesser des Messrohres 20 an dem Halteelement 5 ausgebildet und angeordnet.

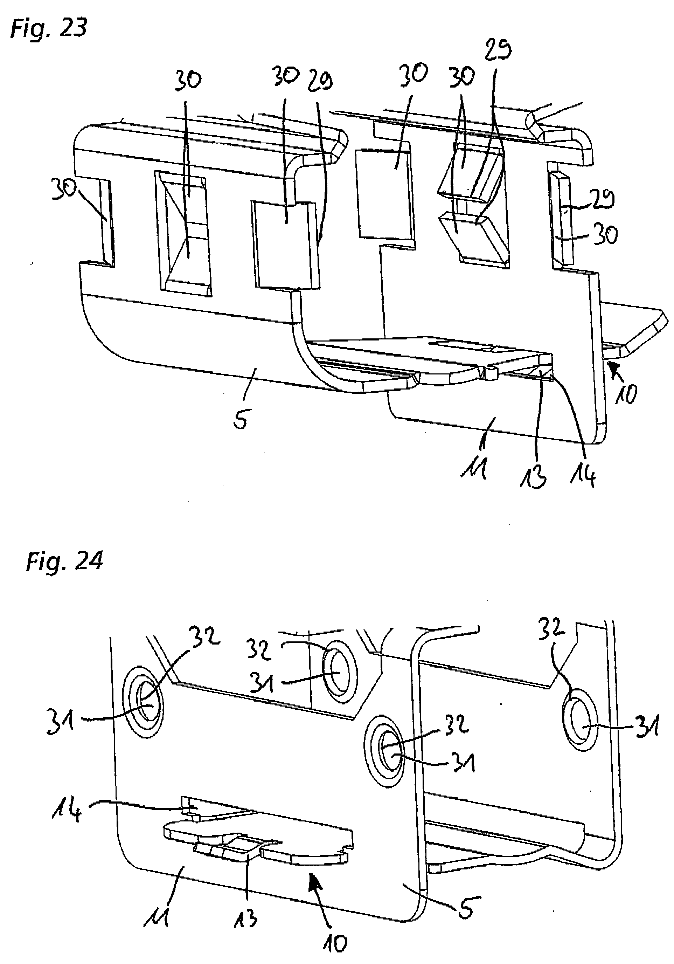

In Fig. 23 ist ein vorteilhaftes Halteelement 5 gezeigt, das im Wesentlichen dem Halteelemente 5 der Fig. 1 entspricht. Das Halteelement 5 weist hier jedoch einen im Wesentlichen rechteckigen Querschnitt auf. Anstelle der Belagteile weist das Halteelement 5 an der Seite der Rastöffnung 14 und an der gegenüberliegenden Seite jeweils vier Haltezungen 30 auf, die nach innen hervorstehen. Die Haltezungen 30 sind in einem Stanzbiegeprozess gefertigt. An ihrem freien Ende haben die Haltezungen jeweils eine Haltekante 29, die sich in Gebrauchsstellung in das Material des Rohres eingräbt. Auf jeder Seite sind zwei Haltekanten 29 quer zur Rohrrichtung angeordnet, die in Rohrrichtung in entgegengesetzte Richtungen zeigen. Zwei weitere Haltekanten 29 sind längs zur Rohrrichtung angeordnet, zeigen in Umfangsrichtung in entgegen gesetzte Richtungen, im Beispiel in Richtung Rohrachse. Dadurch ist jede Bewegung des Halteelements immer gegen eine Haltekante gerichtet, wodurch eine effektive Sicherung gegen Verdrehen und verschieben in alle Richtungen erreicht ist.

Die Fig. 24 zeigt ein Halteelement 5 ähnlich der Fig. 23 mit jeweils zwei kreisförmigen Stanzlöchern 31 in den Seiten anstelle der Haltezungen. An den Stanzlöchern 31 ist jeweils eine nach innen gerichtete geschlossen umlaufende Haltekante 32 gebildet. Diese umlaufende Haltekante 32 gräbt sich ebenfalls in das Rohrmaterial ein und bildet in jeder Richtung eine Sicherung gegen Verdrehen und Verschieben. Neben der gezeigten Kreisform kann das Stanzloch 31 beispielsweise auch oval oder eckig geformt sein. Entscheidend ist hier die umlaufende Haltekante 32.

Selbstverständlich können die Haltekanten auch auf andere Art gebildet sein oder andere Formen aufweisen.

Dementsprechend betrifft die vorstehend beschriebene Erfindung eine Haltevorrichtung 1 zur ortsfesten Anordnung von wenigstens einem Messfühler 21 an einem von einem Medium durchströmten Messrohr 20, wobei die Haltevorrichtung 1 ein Halteelement 5 aufweist, welches in Gebrauchsstellung das Messrohr 20 umgreift. Dabei ist das Halteelement 5 mittels zumindest einer Rastverbindung 10, 10' zur ortsfesten Anordnung schließbar und das Halteelement 5 trägt wenigstens eine Messfühler-Aufnahme 25 für den zumindest einen Messfühler 21.

Dabei weist das Halteelement 5 wenigstens einen die Rastverbindung herstellenden Rastkopf auf, der mit einer Abdeckung 12, 12' versehen ist, die ein Lösen der Rastverbindung 10, 10' verhindert, und an dem Halteelement 5 ist wenigstens ein nachgiebiges Belagteil 15 ausgebildet, das in Gebrauchsstellung zwischen dem umgriffenen Messrohr 20 und dem Halteelement 5 angeordnet ist. Außerdem kann bei einem weiteren Aspekt der Erfindung die Haltevorrichtung 1 mit einer Verbindungsmittel-Aufnahme 22 für ein elektrische Verbindungsmittel 19 zur Verbindung mit dem Messfühler 21 aufweisen, wobei der Messfühler 21 aus der Messfühler-Aufnahme 25 entfernbar ist, ohne dass das Verbindungsmittel 19 aus der Verbindungsmittel-Aufnahme 22 entfernt sein muss. Dabei kann schließlich ein Kodierelements 6 zur Kodierung einer Steckverbindung zwischen einem Verbindungsmittel 19 und einer Verbindungsmittel-Aufnahme 22 einer Haltevorrichtung 1 Verwendung finden.

### Bezugszeichen

- 1: Haltevorrichtung
- 5: Halteelements
- 6: Kodierelement
- 7, 7': Rücksprung
- 8: gemeinsame Aufnahme
- 9: Rücksprung
- 10, 10`: Rastverbindung
- 11: Rastkopf
- 12, 12': Abdeckung
- 13: Rastzunge
- 14: Rastöffnung
- 15: Belagteil
- 16: Handhabungsfläche
- 17: Gehäuse
- 18: Rastelement
- 19: elektrisches verbindungsmittel
- 20: Messrohr
- 21: Messfühler
- 22: Verbindungsmittel-Aufnahme
- 23: Stecker
- 24, 24': elektrische Kontakte
- 25: Messfühler-Aufnahme
- 26: axialer Anschlag
- 27: Materialschwächung
- 28: Axialabschnitt
- 29: Haltekante
- 30: Haltezunge
- 31: Stanzloch
- 32: geschlossen umlaufende Haltekante

## Patentansprüche

1. Haltevorrichtung (1) zur ortsfesten Anordnung von wenigstens einem Messfühler (21) an einem von einem Medium durchströmten Messrohr (20), wobei die Haltevorrichtung (1) ein Halteelement (5) aufweist, welches in Gebrauchsstellung das Messrohr (20) umgreift **dadurch gekennzeichnet, dass** das Halteelement (5) mittels zumindest einer Rastverbindung (10, 10') zur ortsfesten Anordnung schließbar ist und wobei das Halteelement (5) wenigstens eine Messfühler-Aufnahme (25) für den zumindest einen Messfühler (21) trägt, dass das Halteelement (5) wenigstens einen die Rastverbindung (10, 10') herstellenden Rastkopf (11) aufweist, der mit einer Abdeckung (12, 12') versehen ist, die ein Lösen der Rastverbindung (10, 10') verhindert, und dass an dem Halteelement (5) wenigstens ein nachgiebiges Belagteil (15) ausgebildet ist, welches in Gebrauchsstellung zwischen dem umgriffenen Messrohr (20) und dem Halteelement (5) angeordnet ist.

2. Haltevorrichtung (1) nach Anspruch 1, **dadurch gekennzeichnet, dass** das wenigstens eine Belagteil (15) insbesondere in Verbindungsrichtung zwischen Messrohr (20) und Halteelement (5) und/oder zumindest in einer von dem Halteelement (5) abragenden Dimension nachgiebig ausgebildet ist und/oder dass eine Mehrzahl insbesondere über den Umfang des Messrohrs (20) gleichmäßig beabstandeter Belagteile (15) vorgesehen sind.

3. Haltevorrichtung (1) nach einem der Ansprüche 1 oder 2, **dadurch gekennzeichnet, dass** das Halteelement (5) aus wenigstens einem Metallband gebildet ist, mit welchem das wenigstens eine Belagteil (15) insbesondere durch Anspritzen verbunden ist, und/oder dass die nachgiebige Ausgestaltung des Belagteils (15) so dimensioniert ist, dass ein Einrasten der Rastverbindung (10, 10') und ein kraftschlüssiges Umgreifen des Messrohrs (20) ermöglicht ist.

4. Haltevorrichtung (1) nach einem der Ansprüche 1 bis 3, **dadurch gekennzeichnet, dass** der Rastkopf (11), insbesondere die Abdeckung (12, 12`), mit dem Halteelement (5) mittels Anspritzen dauerhaft verbunden ist und/oder dass das wenigstens eine Belagteil (15) und die Abdeckung (12, 12') jeweils aus einem Kunststoff gebildet sind, insbesondere wobei der Kunststoff der Abdeckung (12, 12') eine höhere Materialhärte als der Kunststoff des Belagteils (15) aufweist.

5. Haltevorrichtung (1) nach einem der Ansprüche 1 bis 4, **dadurch gekennzeichnet, dass** die Rastverbindung (10, 10') durch zwei freie Enden des Halteelements (5) gebildet ist, von denen ein Ende als der Rastkopf (11) mit einer Rastöffnung (14) das andere Ende mit einer Rastzunge (13) derart übergreift, dass die Rastzunge (13) in die Rastöffnung (14) eingreift, und/oder dass die Abdeckung (12, 12') das oder ein im Rastkopf (11) verrastetes Rastmittel, bevorzugt die Rastzunge (13), von außen unzugänglich abdeckt.

6. Haltevorrichtung (1) nach einem der Ansprüche 1 bis 5, **dadurch gekennzeichnet, dass** die Abdeckung (12, 12') an dem Haltelement (5) nicht offenbar ausgebildet ist und/oder dass das Halteelement (5) und/oder der Rastkopf (11) aus einem Federstahl, einem glasfaserverstärkten Kunststoff oder einem Duroplast ausgebildet ist bzw. sind.

7. Haltevorrichtung (1) nach einem der Ansprüche 1 bis 6, **dadurch gekennzeichnet, dass** an dem Halteelement (5) wenigstens zwei in einer Längs- oder Einsteckrichtung voneinander beabstandet angeordnete Rastmittel ausgebildet sind.

8. Haltevorrichtung (1) zur ortsfesten Anordnung von wenigstens einem Messfühler (21) an einem von einem Medium durchströmten Messrohr (20), wobei die Haltevorrichtung (1) ein Halteelement (5) aufweist, welches in Gebrauchsstellung das Messrohr (20) umgreift, wobei das Halteelement (5) mittels zumindest einer Rastverbindung (10, 10') an dem Messrohr (20) fixierbar oder fixiert ist und wobei das Halteelement (5) wenigstens eine Aufnahme (25) für den zumindest einen Messfühler (21) trägt, insbesondere nach einem der vorangegangenen Ansprüche, wobei der Messfühler (21) an ein elektrisches Verbindungsmittel (19) anschließbar ist, **dadurch gekennzeichnet, dass** die Haltevorrichtung (1) eine Verbindungsmittel-Aufnahme (22) für das elektrische Verbindungsmittel (19) aufweist, wobei der Messfühler (21) aus der Messfühler-Aufnahme (25) entfernbar ist, ohne dass das Verbindungsmittel (19) aus der Verbindungsmittel-Aufnahme (22) entfernt sein muss.

9. Haltevorrichtung (1) nach Anspruch 8, **dadurch gekennzeichnet, dass** die Verbindungsmittel-Aufnahme (22) so auf die Messfühler-Aufnahme (25) ausgerichtet ist, dass das Verbindungsmittel (19) durch Einsetzen in die Verbindungsmittel-Aufnahme (22) an den in die Messfühler-Aufnahme (25) eingesetzten Messfühler (21) elektrisch angeschlossen ist, insbesondere wobei die Verbindungsmittel-Aufnahme (22) in einer Verlängerung längs einer Einsteckrichtung einer Steckaufnahme an dem in die Messfühler-Aufnahme (25) eingesetzten Messfühler (21) angeordnet ist.

10. Haltevorrichtung (1) nach einem der Ansprüche 8 oder 9, **dadurch gekennzeichnet, dass** die Messfühler-Aufnahme (25) und die Verbindungsmittel-Aufnahme (22) elektrisch miteinander verbindbar oder verbunden sind und/oder eine gemeinsame Aufnahme (8) bilden, insbesondere wobei die gemeinsame Aufnahme (8) durch eine Mehrzahl von Öffnungen zugänglich sind, besonders bevorzugt wobei ein Messfühler (21) und ein Verbindungsmittel (19) durch Einsetzen in zwei bevorzugt einander an der gemeinsamen Aufnahme (8) gegenüber liegend angeordnete Öffnungen mit einander elektrisch miteinander verbindbar oder verbunden sind.

11. Haltevorrichtung nach Anspruch 10, **dadurch gekennzeichnet, dass** der Messfühler (21) und das Verbindungsmittel (19) innerhalb der gemeinsamen Aufnahme (8) eine mechanische Verbindung, insbesondere eine Steckverbindung, eingehen.

12. Haltevorrichtung nach einem der Ansprüche 10 oder 11, **dadurch gekennzeichnet, dass** die Aufnahme (8, 22) und/oder das Verbindungsmittel (19) zumindest in einem anfänglichen, unbenutzten Auslieferungszustand durch die Anordnung wenigstens eines Kodierelement (6) in einer Mehrzahl von möglichen Kodierpositionen derart kodierbar ist, dass die kodierte Aufnahme (8, 22) nur genau denjenigen Typ von Verbindungsmittel (19) aufnimmt, der zu der jeweiligen Kodierung passt.

13. Haltevorrichtung nach einem der Ansprüche 10 bis 12, **dadurch gekennzeichnet, dass** die Verbindungsmittel-Aufnahme (22) einen im wesentlichen rechteckigen Querschnitt mit voneinander verschiedenen Längs- und Querseiten aufweist, in dessen Eckbereichen sich Rücksprünge (9) befinden, die sich entlang der Einsteckrichtung der Verbindungsmittel-Aufnahme (22) erstrecken.

14. Haltevorrichtung nach Anspruch 12 oder 13, **dadurch gekennzeichnet, dass** das wenigstens eine Kodierelement (6) gemeinsam mit einem Stecker (23) des elektrischen Verbindungsmittels (19) in die Verbindungsmittel-Aufnahme (22) steckbar ist und zumindest ein Axialabschnitt (28) des Steckers (23) im Wesentlichen den Querschnitt der Verbindungsmittel-Aufnahme (22) ausfüllt, insbesondere wobei der Querschnitt des Axialabschnitts (28) in wenigstens einem Eckbereich einen vorzugsweise rechteckigen Rücksprung (7) aufweist, der sich in Gebrauchsstellung mit dem oder einem gegenüberliegenden, vorzugsweise rechteckigen, Rücksprung (9) der Verbindungsmittel-Aufnahme (22) zum Querschnitt des wenigstens einen Kodierelement (6) ergänzt.

15. Haltevorrichtung (1) nach einem der Ansprüche 12 bis 14, **dadurch gekennzeichnet, dass** das wenigstens eine Kodierelement (6) gemeinsam mit dem Stecker (23) des elektrischen Verbindungsmittels (19) in die Aufnahme (8, 22) steckbar und dort unlösbar oder unverlierbar verriegelbar, insbesondere verrastbar, ist.

16. Haltevorrichtung (1) nach einem der Ansprüche 12 bis 15, **dadurch gekennzeichnet, dass** das wenigstens eine Kodierelement (6) in dem Auslieferungszustand an dem Halteelement (5) oder dem elektrischen Verbindungsmittel (19) lösbar, insbesondere einstückig mit einer Solltrennstelle, angeordnet ist und/oder dass das Kodierelement (6) in dem Auslieferungszustand an dem Halteelement (5) oder dem elektrischen Verbindungsmittel (19) angespritzt ist und insbesondere die Solltrennstelle (27) durch eine Materialschwächung des gespritzten Kunststoffs gebildet ist.

17. Haltevorrichtung (1) nach einem der Ansprüche 1 bis 16, **dadurch gekennzeichnet, dass** in dem Halteelement (5), eine aus dem Halteelement (5) nach innen vorstehende Haltekante (29; 32) ausgebildet ist, die ein Verdrehen und/oder verschieben des Halteelements (5) verhindert.

18. Haltevorrichtung (1) nach Anspruch 17, **dadurch gekennzeichnet, dass** wenigstens zwei Haltekanten (29) in versetzten Ausrichtungen ausgebildet sind und/oder dass die Haltekante (29) am freien Ende einer Haltezunge (30) ausgebildet ist, die in einem Stanzbiegeprozess gefertigt ist, und/oder dass die Haltekante (32) als geschlossen umlaufende Linie ausgebildet ist, so dass das Halteelement (5) gegen ein Verdrehen und Verschieben gesichert ist.

19. Verwendung eines Kodierelements (6) zur Kodierung einer Steckverbindung zwischen einem Verbindungsmittel (19) und einer Verbindungsmittel-Aufnahme (22) einer Haltevorrichtung (1) nach einem der Ansprüche 1 bis 18, wobei das Kodierelement (6) zu einer Kodierung des Verbindungsmittels (19) auf die Verbindungsmittel-Aufnahme (22) an dem Verbindungsmittel (19) oder der Verbindungsmittel-Aufnahme (22) angeordnet wird, das Kodierelement (6) lösbar, vorzugsweise einstückig mit einer Solltrennstelle (27), an dem nicht zu kodierenden Verbindungsmittel, beispielsweise dem Messfühler (21) oder der nicht zu kodierenden Verbindungsmittel-Aufnahme (25) ausgebildet ist und wobei das Kodierelement (6) zur Kodierung gelöst und mit dem zu kodierenden Verbindungsmittel (19) oder der zu kodierenden Verbindungsmittel-Aufnahme (22) vorzugsweise unlösbar oder unverlierbar verbunden wird.

20. Befestigungsset zur ortsfesten Anbringung von wenigstens einem Messfühler (21) an einem Messrohr (20) mit einer Haltevorrichtung (1), die wenigstens ein Halteelement (5) mit zumindest einer Aufnahme (8, 22, 25), einen Messfühler (21), ein Verbindungsmittel (19) und ein Kodierelement (6) aufweist.
